# EUROPEAN PATENT APPLICATION

(11) **EP 3 037 791 A1**
(43) Date of publication of application: **29.06.2016**
(21) Application number: 14199652.0
(22) Date of filing: 22.12.2014
(51) Int. Cl.: G01F 1/684, G01F 1/688

(54) **Flow sensor**

(71) Applicant: Sensirion AG, 8712 Stäfa (CH)
(72) Inventor: Wüest Robert, 8712 Stäfa (CH); Dankerl, Markus, 8712 Stäfa (CH); Rüegg, Andreas, 8712 Stäfa (CH)
(74) Representative: Detken, Andreas

(57) **Abstract**

A flow sensor (1) comprising at least one sensitive area (3) for measuring a fluid flow flowing in a main flow direction (2) over said sensitive area (3), the flow sensor (1) further comprising a sensor substrate (4), the sensor substrate (4) having at least one cavity (90). Said flow sensor (1) further comprises at least one membrane (5), the membrane (5) being spanned over the cavity (90) and carrying at least one sensing element (6), wherein the sensitive area (3) is part of the membrane (5). Said sensor (1) further comprises a screening structure (7;71,72,73;74,75;76), the screening structure (7;71,72,73;74,75;76) being configured, owing to its shape, its material and/or its placement relative to the sensitive area (3), to at least partly electrically and/or physically screen the sensitive area (3) from deposition of particles (8) carried in said fluid flow.

## Description

### TECHNICAL FIELD

The present invention relates to a flow sensor for measuring a fluid flow.

### PRIOR ART

Flow sensors in contact with ambient media, such as air or a working gas, are subject to various contaminations and fouling, see, for example, DE 10 2005 028 142 A1. For membrane based flow sensors in general, and for mass air flow sensors in particular, particle deposition on a sensitive area of the sensor, *e.g*. its membrane, may render the sensor inaccurate, de-calibrated, or less sensitive. Contaminations may, for example, be airborne particles or droplets of oil or the like.

### SUMMARY OF THE INVENTION

It is therefore an object of the present invention to provide a flow sensor that is more robust against contaminations conveyed in the measured fluid.

This object is achieved by a flow sensor according to claim 1. Accordingly, a flow sensor with at least one sensitive area for measuring a fluid flow flowing in a main flow direction over said sensitive area is suggested, said sensor comprising a sensor substrate with a cavity, the sensor further comprising a membrane, the cavity being spanned by the membrane, wherein the membrane carries at least one sensing element and comprises, on its outwardly facing surface, said sensitive area. Accordingly, the sensitive area is part of the membrane. The sensor further comprises a screening structure, the screening structure being configured, owing to its shape, its material and/or its placement relative to the sensitive area, to at least partly electrically and/or physically screen the sensitive area from deposition of charged and/or polar particles carried in said fluid flow. This effectively reduces a particle deposition of charged and/or polar particles onto said sensitive area, said charged and/or polar particles being conveyed in said fluid flow. The screening may be of electrical nature, *i.e*. effected by means of the Coulomb force. Additionally or alternatively, the screening may be achieved by an element that is placed in the sensitive area, which, in effect, shifts the sensitive area on the membrane. According to some embodiments of the invention, the sensitive area is shifted from its original location to a location where less particle deposition occurs, *e.g*. because an image charge effect is less pronounced in the new location with respect to the original location. Thereby, a contribution of the image charge effect associated with said charged and/or polar particles to said particle deposition rate onto said sensitive area is decreased.

The term "deposition rate" is the number of deposited particles per time unit. An effective decrease of the deposition rate means a decrease of at least 0.5%, preferably of at least 1%, of at least 5%, in particular of at least 10%, 15%, or 20% or more of the deposition rate without the screening structure (or of the deposition rate without the electrically floating or electrically insulating sensor substrate, see below).

A deflection structure in the sensitive area avoids the detrimental effect of deposited particles altogether. In effect, the sensitive area is, however, shifted to a non-covered area of the membrane. The advantage may then be achieved by shifting the sensitive area of the membrane into an area where the particle deposition due to the image charge effect is smaller than it is at the original location, *e.g*. at the cavity edge.

The present invention is based on the insight that one can avoid the negative influence of the image charge effect induced particle deposition in a flow sensor, in particular in membrane-based sensors, by decreasing a charged and/or polar particle deposition rate onto the sensitive area of the sensor through adding structures that compete with the image charge effect present without said structures and/or through separating the sensitive area of the sensor from areas with a pronounced image charge effect, such as the cavity edges.

The image charge effect occurs, generally, if a charged and/or polar particle is located or travelling at distance to an electrically conductive body. This effect causes an attractive force between the particle and the opposing body. This attractive force is decreased if the image charge effect is decreased. Protecting the sensor against contaminants conveyed in the fluid to be measured increases the robustness of the sensor. Accordingly, the present invention decreases charged and/or polar particle deposition onto the sensitive area of the sensor by keeping charged and/or polar particles fluidborne (in the sense of airborne) or by directing them to deposit sites in non-sensitive areas of the sensor.

The term "fluid" refers to a gas or a liquid or a mixture thereof.

The flow sensor measures a fluid flow. The sensor is preferably a flow sensor that is implemented on a silicon substrate, preferably integrated in a CMOS chip.

In a gasflow sensor with membrane, for example, the term "sensitive area" refers to outwardly facing *(i. e.* not cavity facing) surface parts of the membrane, where no elements are placed that have a higher thermal conductivity than the membrane itself - *i.e.* outside areas where the heater and temperature sensing elements are placed on or in the membrane - and where significant heat exchange occurs. Accordingly, the membrane area in the region of the cavity edges, *i.e.* the area where the membrane is in contact with the sensor substrate is such a sensitive area.

The membrane is thermally less conductive than the bulk substrate (*e.g*. silicon bulk). Accordingly, temperature differences can occur across the membrane or across parts of the membrane. As particle deposits on the membrane provide an additional thermal conductivity path between the substrate and the temperature sensing element, they change the temperature measured by the sensing element and are therefore adversely affecting the sensor.

The membrane is especially sensitive to the deposition of particles, in particular so between a main heater and tips of temperature sensing elements such as thermocouples and furthermore between corners of the thermopile area at the tips of the thermocouples (toward the main heater) and the substrate at the side and generally at the cavity edges.

Generally, the membrane is most sensitive to the particle deposition in regions where: i) no metal or poly-silicon structures (like, *e.g.,* heater or temperature sensing elements) are arranged, ii) where no air movement is directed away from the membrane (positive thermophoretic effect), and iii) where significant energy transfer occurs that would change upon particle deposition.

Accordingly, the membrane is particularly sensitive to the deposition of particles between the heating element and the temperature sensing element and between the temperature sensing elements and an edge of the membrane, where the membrane contacts the substrate.

In some embodiments, the screening structure comprises at least one deposition element with at least one deposition surface, the deposition surface being arranged outside the sensitive area, preferably on the sensor substrate, and being arranged such that the deposition surface is facing said fluid flow conveyed to or over said sensitive area. Said deposition element is electrically conducting, wherein an electrical polarizability of said deposition element is higher than an electrical polarizability of the sensor substrate or of the sensitive area, in particular of the membrane. A surface area, the polarizability and an arrangement of the deposition surface are such that at least part of the charged and/or polar particles are guided toward the deposition surface and in effect away from the sensitive area such as to effectively decrease a particle deposition in the sensitive area. Preferably, the deposition element is electrically grounded.

Accordingly, in some embodiments, the image charge effect itself is used to direct the deposition of charged and/or polar particles to areas (the deposition surface) where they are not detrimental to the sensor performance. Such a passive particle trap can be created by placing at least one conducting body (the deposition element) in the non-sensitive area, wherein the conducting body is electrically floating or preferably grounded such that its image charge effect is pronounced. The charged and/or polar particles carried in the flow will experience an attractive force from the image charge effect of these conducting bodies and therefore are directed away from the sensitive area which reduces the particle deposition of charged and/or polar particles onto sensitive area of the sensor.

The term "electrically floating" means that the corresponding element is not electrically connected to the earth but has a floating electrical ground.

The image charge effect acting on a charged or polar particle requires an opposing and electrically conducting body in order to occur. Generally, the image charge effect is less pronounced if this opposing body is not in contact with electrical ground but is electrically floating or if the body's electrical conductivity or polarizability is low. The magnitude of the above-mentioned attractive force related to the image charge effect of a grounded body is therefore typically greater than for conducting bodies which are not grounded; a difference in said force may be, for example, approximately 4% for charged particles 10 micrometers above a 30 micrometers wide metal plate.

In some embodiments, a plurality of such passive traps is arranged on the sensor. These traps are preferably placed around or on either lateral side of the sensing element or the membrane and close to the membrane, preferably on the sensor substrate, such as to attract particles that otherwise would be deposited onto the sensing element or the sensitive area. In some embodiments, the traps are placed upstream, far away from the sensitive area (if there is enough space), to pre-filter the fluid stream.

Accordingly, it is preferred if the deposition element is electrically grounded as this enhances the image charge effect as described above.

An advantage of such a passive trap as described herein is that it is energy efficient and self-adaptive as regards charge or polarity of the charged or the polar particle.

In a further embodiment, active particle traps are provided additionally or alternatively in order to create an electrical field that guides the charged and/or polar particles (of at least one polarity) away from the sensitive area. Accordingly, in some embodiments, the screening structure comprises, additionally or alternatively, at least one, preferably two or more electrodes, wherein said electrodes are configured to generate an electrical field such as to direct at least part of the charged and/or polar particles away from the sensitive area to effectively decrease the contribution of the image charge effect associated with said charged and/or polar particles to said particle deposition rate. Accordingly, the present invention also relates to active particle traps arranged on the sensor in order to reduce the particle deposition of charged and/or polar particles onto the sensitive area.

By means of the electric field, the charged and/or polar particles can be directed to areas where they are not detrimental to the performance of sensor. This electric field can be generated by the electrodes at different electric potentials placed in or guiding the particles to areas, where particle deposition is not detrimental to the sensor performance.

If a motor is equipped with such a flow sensor for measuring gas flows, the composition of the fluid that is to be measured may change if the mode of the motor changes. If the polarity of the expected particle deposition changes with different operation modes of the sensor or of the motor or if, more generally, the fluid composition changes, the applied electrical field can be adjusted in strength, or to the respective polarity or it can be turned off completely. In the case it is known that only/mostly particles with one polarity (e.g. negative) arrive at the sensor in a specific phase where, for example, the motor is off (for example due to back-diffusion from the motor), it is preferable to have particle traps on a (positive) potential only during these phases. Vice versa, the same applies if only one sort of polarity arrives when the motor is on.

If space allows, and if there is a predetermined direction of the flow of the media carrying the charged and/or polar particles, this active trap can also be placed on either side of the flow before the sensing element, the trap having its positive electrical pole on one lateral side and its negative electrical pole on the other lateral side of the fluid flow.

Preferably, the electrode(s) is(are) arranged at an upstream and/or downstream side of the sensitive area and/or are arranged laterally of the sensitive area and/or at a downstream side of the sensitive area. Laterally means here in lateral direction with respect to the main flow direction (i.e. parallel to the membrane and perpendicular to the main flow direction).

In some embodiments, an electrical potential difference between the electrodes is in the range from 1 volt to 10 volts, preferably 2 volts to 8 volts, in particular of 5 volts, and/or wherein the electrical potential difference is a static or a dynamic potential difference.

In some embodiments, said electrical potential difference is actively controlled in dependence of a signal from a further sensor measuring said fluid, in particular a polarity of particles in the fluid, and/or is controlled in dependence of a state of a device producing or influencing said fluid, such as a motor. Accordingly, a sensor may be arranged in the fluid flow for determining the polarity of the charged particles, wherein the sensor provides a sensor signal reflecting said polarity and wherein said sensor signal is used for controlling the potential difference. Additionally or in the alternative, a status of the device creating or influencing the fluid composition, *e.g.* a motor (status *e.g.* on or off) may be used to control said potential difference such as to minimize a particle deposition onto sensitive areas.

Moreover, it is an aspect of the present invention that the potential difference is actively controlled such that, for example, a potential difference is set in dependence of the composition of the fluid flow, in particular of its contaminants. If an electrical charge of the particles changes the potential difference may be changed. In order to do so, appropriate electronics may be used.

It is a further aspect of the present invention to shift the sensitive areas on the membrane to areas with less particle deposits. This is achieved by means of a diverting structure placed in at least part of the sensitive areas of the membrane but not over the less sensitive areas. Preferably, the diverting structures are made from materials that intrinsically exhibit a low image charge effect, preferably a lower image charge effect than the sensor substrate and/or sensitive area have.

Therefore, in some embodiments, the screening structure comprises, additionally or alternatively, a frame element acting as said diverting structure, the frame element being arranged at least partly in the area that would be the sensitive area without the frame element (*i.e*. the frame element renders part of the sensitive area non-sensitive and thereby shifts the sensitive area, while not shifting the particle deposition to this new sensitive area). Accordingly, the particle deposition occurs onto the frame element which does not disturb the flow sensor. Typically, the frame element is arranged in areas with a pronounced particle deposition rate. For example, the frame element may be arranged close to the cavity edge where a pronounced image charge effect causes a pronounced particle deposition while, at the same time, this area is the contact area between the sensor substrate and the membrane, where heat transfer occurs. Accordingly, as there is a thermal contact between the sensor substrate and the membrane, the membrane region next to the cavity edges constitutes a sensitive area. Particle deposition in this region creates additional heat paths that increase an undesirable heat transfer. A shielding structure such as the frame element receives the particle deposits. The frame element then shifts, in effect, the sensitive area of the sensor away from the membrane region near the cavity edge and toward to the membrane region near the edge of the frame element that faces the middle region of the membrane. As the image charge effect is smaller in this new sensitive area closer to the middle of the membrane, the flow sensor is rendered more robust against particle deposition.

Accordingly, in some embodiments, the screening structure comprises the frame element, the frame element being designed and arranged to shift the sensitive area of the membrane away from the cavity edges toward a middle region of the membrane where the image charge effect associated with said charged and/or polar particles is lower than the image charge effect acting between particles and the region of the cavity edge. Preferably, the frame element is thermally conductive and thermally connected to the sensor substrate such that the frame element has substantially the same temperature as the sensor substrate. Preferably, the frame element has a lower electric polarizability than the sensor substrate.

Accordingly, this is a further kind of passive particle trap.

An advantage of a passive trap as described herein is that it is energy efficient and self-adaptive as regards charge or polarity of the charged or the polar particle.

In some embodiments, the frame element is arranged at least partly, preferably entirely circumferentially around the cavity edge of the cavity. The frame element may be placed on one lateral side, on both lateral sides or on the upstream or downstream side of the sensitive area. There may be placed several frame elements next to each other. The frame element may have one single-piece part or it may comprise a plurality of frame element parts that are arranged one next to another, *e.g*. around the sensitive area, either with a space therebetween or in touch.

The frame element is preferably thermally connected to the sensor substrate; thereby the frame element becomes the thermal reference for the membrane like the bulk is the thermal reference for the membrane in flow sensors without such a frame element. Furthermore, the frame element is preferably thermally conductive and has a lower electric polarizability than the sensor substrate such as to effectively decrease the contribution of the image charge effect associated with said charged and/or polar particles to said particle deposition rate. Accordingly, it is yet another aspect of the present invention to physically screen the opposing body at least partly with a structure such as to shift selected sensitive areas on the membrane to areas with less particle deposition. Such a shielding structure may be the frame element that is partly arranged on the membrane in regions where the image charge effect associated with the charged and/or polar particles conveyed in the flow is high.

In some embodiments, the frame element is made from a material selected from the group consisting of diamond, silicon carbide, zinc oxide, gallium nitride, poly-silicon, aluminum, tungsten, copper, and platinum.

The frame element may not only be used to better define the boundary of the membrane in terms of thermal conductivity, it may also have further benefits as a mechanical stabilizer of the membrane.

In some embodiments, a membrane-side width of the frame element is such that the frame element protrudes from the cavity edge inwardly over the membrane such as to effectively shift the sensitive membrane area away from the edge region towards less particle deposition. Preferably, the membrane-side width is such that the frame element protrudes from the sensor substrate over the membrane so far as to shift the sensitive area to a region where the image charge effect on the charged and/or polar particles of the frame element is lowered.

In some embodiments, a sensor substrate-side width of the frame element is such that the frame element protrudes from the cavity edge outwardly over the sensor substrate such that:
- it continues on the sensor substrate side for at least as long as the frame element's thickness; and
- it is large enough to account for the thermal conductivity of the interface between the frame element and the sensor substrate such that the frame element is thermally well connected to the substrate and has, in general, the same temperature like the substrate. Thereby, the frame element constitutes the thermal reference for the membrane.

Moreover, the substrate-side width is preferably at least as large as the membrane side width.

Preferably, the criterion resulting in the biggest substrate-side width shall apply.

The width is measured in a direction parallel to the membrane surface and perpendicular to a longitudinal direction of the frame element. The thickness is measured in a direction vertically to the membrane surface.

In some embodiments, the thickness of the frame element is, depending on the specific thermal conductivity of the frame element material, such that an overall thermal conductivity of the frame element is larger than the thermal conductivity of the membrane.

The frame element may, for example, be made of Aluminum. In this case the thickness of the frame element may be between 0.1 micrometer and 5 micrometers and the width of the frame element may be between 1 micrometer and 25 micrometers on the membrane side as well as the bulk or substrate side.

The present invention also relates to a sensor device sensing with a sensor as described above. The flow sensor device comprises at least one flow sensor according to invention and a housing with a fluid inlet and fluid outlet, the housing defining a fluid path fluidly connecting the fluid inlet and the fluid outlet wherein the fluid path runs along the main flow direction.

In some embodiments, the flow sensor device comprises a flow sensor with an active trap as outlined above and is configured to receive an input signal and to switch, depending on an input signal, the potential difference to a negative value, to zero, or to a positive value. The input signal may be from an analyzer sensor that analyses the composition of the fluid flow or an operation mode of a motor *(e.g.* a motor producing exhaust gas and/or taking in combustion gases) or another device producing the fluid. If the analyzer sensor detects a change in the sign of the charged and/or polar particles or a change of the operation mode it may adapt the potential difference applied to the electrodes accordingly. The analyzer may be integrated to the same chip as the flow sensor element or onto the flow sensor element.

Therefore, it is an aspect of the present invention to offer an integrated and cost effective way of avoiding the deposition of charged and/or polar particles/droplets on the sensitive part of the sensing element by arranging a screening structure on or in the sensor such that the particle deposition rate onto at least part of the sensitive area of the sensor element is reduced or avoided. This can be done by placing structures with a preferably strong image charge effect next to the sensitive area such that the particles are guided away from the sensitive area, or by placing structures with a low image charge effect in at least part of the sensitive area in order to shift said part away from particle deposition. Preferably, said covered parts of the sensitive area are parts where a strong particle deposition is expected due to a pronounced image charge effect. The region of cavity edges, *i.e.* the region where the membrane is attached to the substrate, is sensitive as particle deposition in this area leads to an enhanced heat transfer onto the membrane. Moreover, a pronounced image charge effect is to be expected at the cavity edge. Accordingly, in some preferred embodiments, at least part or all the cavity edges are covered by a screening structure, *e.g*. a frame element. By placing such a frame element, the sensitive area of the sensor is changed. If a frame element is placed over the cavity edges, the sensitive area is shifted from the cavity edges to the membrane-side edges of the frame elements. The geometry of the frame element is advantageously chosen such that this new sensitive area in the region of the membrane-side edges of the frame element has, in average, a lower image charge effect whereby a particle deposition onto the new sensitive area is reduced.

These are advantageous measures as they are all passive, *i.e.* no potential source is required. Additionally or alternatively, active traps in form of electrodes may be arranged on or close to the sensor such that the charged and/or polar particles are actively guided away from the sensitive area. This further supports the robustness of the sensor. This method allows a greater force to be applied on the charged and/or polar particles to direct them away from sensitive areas. In many applications it is easy to provide the necessary potential source.

It is a further aspect of the present invention to effectively reduce the above described charged and/or polar particle deposition onto the sensitive area by providing a sensor substrate that inherently reduces an image charge effect acting on a passing charged and/or polar particle. Accordingly, in some embodiments, the sensor substrate is kept electrically floating or it is a substantially electrically insulating material such that the contribution of the image charge effect associated with said charged and/or polar particles to said particle deposition rate onto the sensitive area is effectively decreased.

Accordingly, the present invention also relates to a flow sensor with at least one sensitive area for measuring a fluid flowing in a main flow direction over said sensitive area, said sensor comprising a sensor substrate with a cavity, the cavity being spanned by a membrane, the membrane carrying at least one sensing element and providing said sensitive area. Moreover, the sensor substrate is, at least in the region of the sensitive area, preferably in the region of the edges of the cavity, kept electrically floating or it is a substantially electrically insulating material such that the contribution of the image charge effect associated with said charged and/or polar particles to said particle deposition rate onto the sensitive area is effectively decreased.

Accordingly, a flow sensor traditionally fabricated on an electrically conducting substrate benefits from making its sensor substrate electrically floating or less electrically conducting or even non-conducting, as this reduces the image charge effect and therefore decreases the deposition of charged and/or polar particles onto the opposing body.

An advantage of a passive trap as described herein is that it is energy efficient and self-adaptive as regards charge or polarity of the charged or the polar particle.

The flow sensor as described herein is preferably built from layers that are used in CMOS technology.

Sensors based on semiconductor technology (e.g. MEMS sensors) benefit from a screening structure according to the invention, in particular from a substrate that is non-conducting or at least electrically floating.

It is a further aspect of the present invention that the screening structure comprises, alternatively or additionally, at least one thermal element, a cooling element or preferably a heater element. The heater element is arranged and adapted such as to effectively reduce a particle deposition of particles onto said sensitive area, said particles being conveyed in said fluid flow, by causing a thermophoretic effect onto the particles. At least one additional heater element may be arranged upstream of the sensitive area and/or at least one heater may be arranged downstream of the sensitive area and/or at least one additional heater element may be arranged on either or one of the sides of the sensitive area. Accordingly, it is a further aspect of the present invention to use thermophoretic effect to decrease the deposition rate of particles onto sensitive areas.

Also, it is within the scope of the present invention to provide a sensor comprising a sensor substrate that is kept electrically floating or is a substantially electrically insulating material and/or comprising the screening structure according to invention and as described herein and/or comprising the additional heater elements to achieve the above-mentioned thermophoretic effect. Accordingly, a combination of these aspects of the invention is within the scope of the present invention.

Moreover, the present invention relates to a method for measuring a fluid flow by means of a flow sensor according to the invention, wherein a fluid is conveyed over the sensitive area of the flow sensor. For conveying the fluid over the sensitive area, the fluid is guided through the fluid inlet into and through the fluid outlet out of a housing of the sensor device. By means of the flow sensor according to the invention, a deposition rate of charged and/or polar particles onto the sensitive area of the flow sensor may be reduced in that an image charge effect is reduced by configuring the sensor substrate to be electrically floating or electrically insulating, by arranging screening structures over or close to the sensitive area such that any particle deposition due to the image charge effect on the charged and/or polar particles is reduced or avoided in the sensitive area of the membrane, by arranging screening structures over, next to or outside of the sensitive area that have a more pronounced image charge effect on the charged and/or polar particles than the sensitive area, and/or by placing an electrical filter on the flow sensor, preferably close to the sensitive area, such that an electrical field is produced that guides the charged and/or polar particles away from the sensitive area.

In a preferred embodiment relating to a sensor with an active trap as described above, the method comprises the steps of adjusting an electrical potential difference according to the polarity and/or density of the charged and/or polar particles.

Moreover, an improved robustness of the sensor can be achieved by placing additional heater elements on the sensor such that thermophoretic effects which guide particles to the sensitive area are decreased and that thermophoretic effects which guide particles away from the sensitive area are increased.

The sensor described above may also be any other type of sensor element which suffers from particle deposition, in particular due to an image charge effect.

The invention also relates to a use or a method of such a sensor for measuring a fluid flow, wherein a fluid is conveyed over the sensitive area of the sensor and, if the sensor is equipped with active particle traps, *i.e*. it has at least one electrode for creating an electrical filter, to control the active particle trap in dependence of the fluid composition or of the operation mode of the sensor itself or of further devices associated with the fluid flow.

It is to be understood that the herein-described embodiments may be combined with one another to form a further embodiment with parts or all the features of the combined embodiments.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a first embodiment of the flow senor according to the invention, wherein a sensor substrate is electrically floating or insulating;
- Fig. 2: shows a second embodiment of the flow sensor according to the invention, wherein frame elements are arranged around a sensitive area;
- Fig. 3: shows a cross-sectional view through part of the flow sensor according to Fig. 2;
- Fig. 4: shows a cross-sectional view through a part of a third embodiment of a flow sensor according to the invention;
- Fig. 5: shows a fourth embodiment according to the present invention using electrodes as an electrical filter; and
- Fig. 6: shows a fifth embodiment according to the present invention, wherein additional heater elements are placed on the sensitive area.

### DESCRIPTION OF PREFERRED EMBODIMENTS

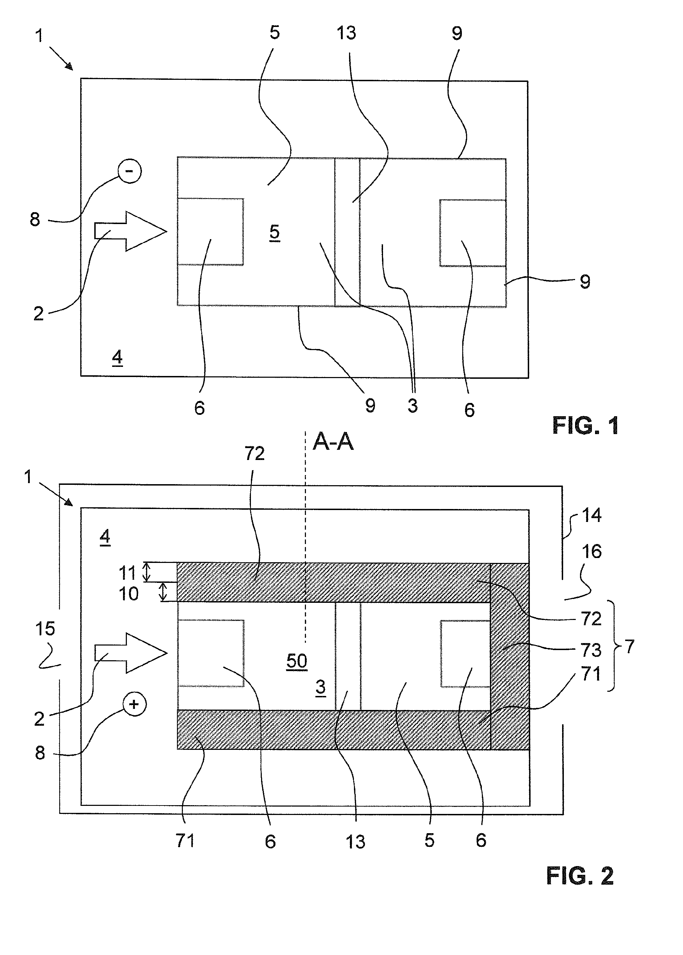

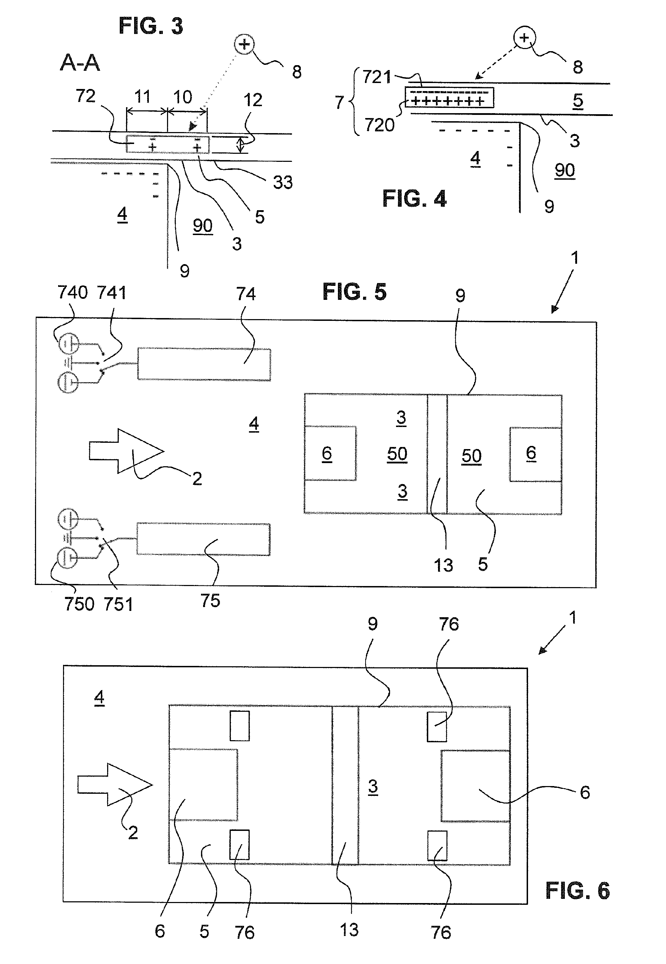

**Figure 1** shows a first embodiment of a flow sensor 1 according to the invention for measuring a fluid flow. The flow sensor 1 comprises a sensor substrate 4, the substrate 4 being electrically floating or electrically non-conducting *(i.e.* electrically insulating). The substrate 4 has a recess or a cavity 90 *(cf.* Figs. 3 & 4) which is spanned by a membrane 5.

Around the membrane 5 are the cavity edges 9. The membrane 5 provides, on its face directed away from the substrate 4, a measurement area. Into this measurement area a main heater 13 and two temperature sensing elements 6 are integrated. The sensing elements 6 may be thermopiles. The main heater 13 is placed between the temperature sensing elements 6, the temperature sensor elements 6 being spaced in a main flow direction 2 of the fluid flow. A temperature of a fluid conveyed over the main heater 13 is increased such that the downstream temperature sensing element 6 detects a higher fluid temperature than the upstream temperature sensing element 6. The resulting temperature difference between the measured temperatures at the two locations is then a measure for the fluid flow.

In the fluid flow along direction 2 there is travelling a plurality of charged and/or polar particles 8. By having the sensor substrate 4 electrically floating or electrically non-conducting, an image charge effect acting between the charged and/or polar particles 8 and the opposing substrate 4 is minimized such that a particle deposition rate onto the sensor substrate 4 and onto the sensitive area 3 is reduced. This decrease in deposition of contaminates 8 minimizes contamination and fouling of the sensor 1 and therefore enhances a robustness and life duration of the sensor 1.

**Figure 2** shows a second embodiment of a flow sensor 1 according to the invention. The flow sensor 1 has all the features of the sensor of the first embodiment, wherein its sensor substrate 4 is either a conventional one or also the one of the first embodiment. In the second embodiment a frame element 71, 72, 73 is placed as screening structure 7 in the cavity edges 9 *(cf.* Fig. 1) around a sensitive area 3. The frame element 71, 72, 73 is placed on either lateral side and on the downstream side of the sensitive area *3, i.e.* over the downstream edge of the membrane 5, where the membrane 5 joins the substrate 4. The frame element comprises parts 71, 72, 73. On the upstream side of the sensitive area 3 - *i.e.* over the upstream edge of the membrane 5, where the membrane 5 joins the substrate 4 - there may be arranged a further frame element like frame element part 73. Accordingly, the screening structure 7 may cover the membrane edge circumferentially around the entire membrane 5.

In some embodiments, the downstream frame element part 73 is missing or parts of the element parts 71, 72 and/or 73 may be missing.

The frame element 71, 72, 73 has preferably a lower electrical polarizability than the substrate 4 and covers part of the sensor substrate 4 (over a distance so-called substrate-side width 11) and also part of the membrane 5 (over a distance so-called membrane-side width 10). This is also illustrated in Fig. 3.

The frame element 71, 72, 73 is made, *e.g.* from a metal *(e.g.* Aluminum) wherein a thickness 12 *(cf.* Fig. 3) of the frame element 71, 72, 73 is between 0.1 micrometer and 5 micrometers and the membrane-side width 10 and the substrate-side width 11 of the frame element 71, 72, 73 may be between 1 micrometer and 25 micrometers.

The frame element 71-73 helps, moreover, to better define a boundary of the membrane 5 in terms of thermal conductivity, *i.e*. the region of the membrane 5 directly thermally exposed to the fluid may exhibit better defined boundaries, particularly on the lateral sides. Moreover, the region of the membrane 5 directly thermally exposed to the fluid is not any longer defined by the cavity edge, where the membrane 5 joins the substrate 4, but by the frame element 71-73.

Furthermore, the frame element 71-73 has further benefits as a mechanical stabilizer of the membrane 5.

Figure 2 further shows a flow sensor device according to invention with the flow sensor 1. The flow sensor device further comprises a housing 14 with a fluid inlet 15 and fluid outlet 16, wherein a fluid path connecting the fluid inlet 15 and the fluid outlet 16 runs along the main flow direction 2.

**Figure 3** shows a cross-sectional view through part of the flow sensor 1 according to the second embodiment. The frame element part 72 at the cavity edge 9 has the thickness 12 and covers the sensor substrate 4 over its substrate-side with 11 and the membrane 5 over its membrane-side width 10. Accordingly, the frame element 72 covers the area that would be sensitive, if there was no frame element 72 and thereby shifts the sensitive area 3 toward a middle region 50 of the membrane 5, more specifically to a location 33, where the image charge effect is smaller, as it is further away from the substrate 4, *i.e.* the cavity edge 9.

Generally, the frame elements 71-73 may be placed onto membrane 5 and substrate 4 or may be fabricated directly into membrane 5 and substrate 4.

As the image charge effect associated with the cavity edge 9 and the charged and/or polar particle 8 still acts, there is an attractive force *(cf.* arrow in Fig. 3) acting onto the charged and/or polar particle 8 such that it is guided onto the frame element 71-73, where it is not detrimental to the sensor performance, whilst a particle deposition onto the new sensitive area 33 is less pronounced as there the image charge effect is smaller than the one associated with the cavity edge 9.

**Figure 4** shows a cross-sectional view through a part of a third embodiment of a flow sensor 1 according to the invention. A screening structure 7 with an electric polarizability that is larger than the polarizability of the sensor substrate 4 is placed on the sensor substrate 4. The screening structure 7 according to Fig. 4 is placed on the sensor substrate 4 and has a high electrical conductivity and is connected to ground. The structure 7 therefore causes an enhanced image charge effect as compared to the sensor substrate 4 and its edge 9. The structure 7 consists of a deposit surface substrate 720 and a deposit surface 721. Preferably, it is made from metal. The structure 7 is arranged such that conveyed particles 8 are attracted toward the surface 721 such that the deposition rate of particles 8 onto area 3 is decreased. The higher the image charge effect, the closer the screening structure should be placed to the cavity edge 9.

For example, if the substrate 4 is made from silicon and the structure 7 is made from aluminum, the structure 7 or the deposit surface 721 may be placed at a distance to the cavity edge 9 that ranges from 0 to 20 micrometers, preferably from 5 micrometers to 10 micrometers, *i.e.* the distance from the cavity-side end of the structure 7 or the deposition surface 721 is up to 20 micrometers.

**Figure 5** shows a fourth embodiment according to the present invention. In the fourth embodiment electrodes 74, 75 are used to create an electrical filter to minimize a deposition rate of charged and/or polar particles 8 onto the sensitive area 3 by guiding the particles 8 away from area 3 through an electrical field.

The electrodes 74, 75 are connected via switches 741, 751 to electrical potential sources 740, 750 or ground.

In general, if, on the one hand, a polarity of the charge of the particles 8 is not known in the respective operation mode, then the electrodes 74, 75 may be placed before the sensitive area 3 (preferably along the main flow direction 2 of the fluid flow). A distance from the sensitive area 3 may be chosen large enough such that an electric field created by the electrodes does not significantly influence the charged particles 8 above the membrane 5. For a potential of 5 volts, a distance of the electrode 74, 75 to the membrane 5 may, for example, be in a range from 50 micrometers to 100 micrometer, preferably about 70 micrometers.

If, on the other hand, the polarity of the charge of the particles 8 is known for some operation modes, the electrodes 74, 75 may be placed on either side (i.e. laterally) of the sensitive area 3. In this case a distance to the sensitive area 3 may be chosen as small as possible.

If, for example, the sensor 1 is used in a motor, an engine control unit may provide a signal to the sensor 1 via a controller, the signal signaling that the motor is in a certain operation mode (e.g. motor running, motor stopped). The sensor 1 then puts the electrodes 74, 75 by means of switches 741, 751 into a predetermined operation mode (depending on *e.g.* the motor operation mode), which could be either a) no potential b) positive potential c) negative potential.

Other methods for determining an operation mode of a motor, such as disclosed in WO 2013/0922999 A2, may be used here.

It is also conceivable to adjust the potential difference in dependence of the velocity of the fluid flow or the density of charged particles 8 in the fluid flow.

**Figure 6** shows a fifth embodiment according to the present invention, wherein additional heater elements 76 are placed on the sensitive area.

By means of these heater elements 76 a thermophoretic effect is produced to minimize particle deposition of particles 8 onto the sensitive area 3.

In gasflow sensors, for example, the thermophoretic effect can lead to particle deposition on the sensor membrane 5 *e.g.* between the thermopile area and the substrate 4.

One or a plurality of additional heater elements 76 placed between substrate 4 and sensing element 6 may raise the temperature of the membrane 5 to such a level, that there is no thermophoretic force towards the membrane 5 or even a thermophoretic force away from the membrane 5. The effect of such additional heater elements 76 needs to be accounted for when calculating the sensor signal/output.

The present invention is not limited to the above-described embodiments, it is to be understood that the invention may also be differently embodied within the scope of the following claims.

### LIST OF REFERENCE SIGNS

| | | | |
|---|---|---|---|
| 1 | Flow sensor | 76 | Additional heater |
| 2 | Main flow direction | | |
| 3 | Sensitive area | 8 | Charged and/or polar particle |
| 33 | shifted sensitive area | | conveyed in fluid flow along 2 |
| 4 | Flow sensor substrate | 9 | Cavity edge of 4/90 |
| 5 | Membrane | 90 | Cavity |
| 50 | Middle region of 5 | | |
| 6 | Sensing element | 10 | Membrane side width of 71,72,73 |
| | | 11 | Flow sensor substrate side width of 71,72,73 |
| 7 | Screening structure | | |
| 71,72,73 | Frame element | 12 | Thickness of 71,72,73 |
| 720 | Deposit surface | 13 | Main heater |
| 721 | Deposit surface substrate | 14 | Housing |
| 74,75 | Electrode | 15 | Fluid inlet |
| 740,750 | Potential source | 16 | Fluid outlet |
| 741, 751 | Switch | | |

## Claims

1. A flow sensor (1) comprising at least one sensitive area (3) for measuring a fluid flow flowing in a main flow direction (2) over said sensitive area (3), the flow sensor (1) further comprising a sensor substrate (4), the sensor substrate (4) having at least one cavity (90), the flow sensor (1) further comprising at least one membrane (5), the membrane (5) being spanned over the cavity (90) and carrying at least one sensing element (6), wherein the sensitive area (3) is part of the membrane (5), **characterized in that** said sensor (1) further comprises a screening structure (7;71,72,73;74,75;76), the screening structure (7;71,72,73;74,75;76) being configured, owing to its shape, its material and/or its placement relative to the sensitive area (3), to at least partly electrically and/or physically screen the sensitive area (3) from deposition of charged and/or polar particles (8) carried in said fluid flow.

2. The flow sensor (1) according to claim 1, wherein the screening structure (7) comprises at least one deposition element (721) with at least one deposition surface (720), the deposition surface (720) being arranged outside the sensitive area (3), preferably on the sensor substrate (4), and being arranged such that the deposition surface (720) is facing said fluid flow conveyed to or over said sensitive area (3), wherein said deposition element (721) is electrically conducting, wherein an electrical polarizability of said deposition element (721) is higher than an electrical polarizability of the sensor substrate (4) or of the membrane (5), and wherein a surface area, the polarizability and an arrangement of the deposition surface (720) are such that at least part of the charged and/or polar particles (8) are guided toward the deposition surface (720) and away from the sensitive area (3) such as to effectively decrease a particle deposition in the sensitive area (3).

3. The flow sensor (1) according to claim 2, wherein the deposition element (721) is electrically grounded.

4. The flow sensor (1) according to any one of claims 1 to 3, wherein the screening structure (7) comprises at least one electrode (74;75) for generating an electrical field such as to direct at least part of the charged and/or polar particles (8) away from the sensitive area (3) to effectively decrease the contribution of the image charge effect associated with said charged and/or polar particles (8) to said particle deposition rate.

5. The flow sensor (1) according to claim 4, wherein the electrode (74,75) is arranged at an upstream side of the sensitive area (3) and/or is arranged laterally or downstream of the sensitive area (3).

6. The flow sensor (1) according to claim 4 or 5, wherein an electrical potential difference between the electrode (74;75) and
- the sensor substrate (4), and/or
- a further electrode (75;74)
is in the range from 1 volt to 10 volts, preferably 2 volts to 8 volts, in particular of 5 volts, and/or wherein the electrical potential difference is a static or a dynamic potential difference.

7. The flow sensor (1) according to claim 6, wherein said electrical potential difference is actively controlled in dependence of a signal from a further sensor measuring said fluid, in particular a polarity of particles (8) in the fluid, and/or is controlled in dependence of a state of a device producing or influencing said fluid, such as a motor.

8. The flow sensor (1) according to any one of claims 1 to 7, wherein the screening structure (7) comprises a frame element (71,72,73), the frame element (71,72,73) being designed and arranged to shift the sensitive area (3) of the membrane (5) away from the cavity edges (9) toward a middle region (50) of the membrane (5) where the image charge effect associated with said charged and/or polar particles (8) is lower than the image charge effect acting between particles (8) and the region of the cavity edge (9), wherein the frame element (71,72,73) is thermally conductive and thermally connected to the sensor substrate (4) such that the frame element (71,72,73) has substantially the same temperature as the sensor substrate (4), and wherein the frame element (71,72,73) preferably has a lower electric polarizability than the sensor substrate (4).

9. The flow sensor (1) according to claim 8, wherein the frame element (71,72,73) is made from a material selected from the group consisting of diamond, silicon carbide, zinc oxide, gallium nitride, poly-silicon, aluminum tungsten, copper, and platinum.

10. The flow sensor (1) according to claim 8 or 9, wherein the frame element (71,72,73) is arranged at least partly circumferentially around the cavity edge (9) of the cavity (90).

11. The flow sensor (1) according to claim 10, wherein a membrane-side width (10) of the frame element (71,72,73) protrudes from the cavity edge (9) toward said middle region (50) of the membrane (5) such as to effectively shift the sensitive area (3) from the cavity edge (9) toward said middle region (50), and
wherein a sensor substrate-side width (11) of the frame element (71,72,73) protrudes from the cavity edge (9) outwardly over or into the sensor substrate (4) such that a thermal contact between the sensor substrate (4) and the frame element (71,72,73) is large enough that the frame element (71,72,73) has substantially the same temperature as the sensor substrate (4), and
wherein, preferably, the frame element (71,72,73) continues on the sensor substrate-side width (11) is at least as long as a thickness (12) of the frame element (71,72,73).

12. The flow sensor (1) according to any one of claims 8 to 11, wherein the thickness (12) of the frame element (71,72,73) is, depending on the specific thermal conductivity of the frame element material, such that an overall thermal conductivity of the frame element (71,72,73) is larger than the thermal conductivity of the membrane (5).

13. A flow sensor (1) with at least one sensitive area (3) for measuring a fluid flowing in a main flow direction (2) over said sensitive area (3), said sensor (1) comprising a sensor substrate (4) with a cavity (90), the cavity (90) being spanned by a membrane (5), the membrane (5) carrying at least one sensing element (6) and providing said sensitive area (3), **characterized in that** the sensor substrate (4) is, at least in the region of the sensitive area (3), preferably in the region of edges (9) of the cavity (90), kept electrically floating or it is a substantially electrically insulating material such that the contribution of the image charge effect associated with said charged and/or polar particles (8) to said particle deposition rate onto the sensitive area (3) is effectively decreased.

14. The flow sensor (1) according to any one of the claims 1 to 13, wherein the flow sensor (1) is built from layers that are used in CMOS technology.

15. A flow sensor (1) with at least one sensitive area (3) for measuring a fluid flowing in a main flow direction (2) over said sensitive area (3), said sensor (1) comprising a sensor substrate (4) with a cavity (90), the cavity (90) being spanned by a membrane (5), the membrane (5) carrying at least one sensing element (6) and providing said sensitive area (3), wherein the screening structure (7) comprises at least one additional thermal element (76), the thermal element (76) being preferably a heater element and being arranged and adapted such as to effectively reduce a deposition of particles (8) onto said sensitive area (3) by causing a thermophoretic effect, said particles (8) being conveyed in said fluid flow.
